# EUROPEAN PATENT APPLICATION

(11) **EP 4 567 956 A1**
(43) Date of publication of application: **11.06.2025**
(21) Application number: 24212650.6
(22) Date of filing: 13.11.2024
(51) Int. Cl.: H01M 10/0587, H01M 50/105, H01M 50/121, H01M 50/136, H01M 50/609, H01M 50/618, H01M 50/636, H01M 50/14

(54) **METHOD FOR MANUFACTURING A SECONDARY BATTERY AND SECONDARY BATTERY**

(30) Priority: 08.12.2023 JP 2023207620
(71) Applicant: Prime Planet Energy & Solutions, Inc., Chuo-ku, Tokyo 103-0022 (JP)
(72) Inventor: Fujimura, Satoshi, Tokyo 103-0022 (JP)
(74) Representative: Kuhnen & Wacker Patent- und Rechtsanwaltsbüro PartG mbB

(57) **Abstract**

The technique disclosed herein relates to a method for manufacturing a secondary battery, and includes an assembly producing step for producing an assembly in which an electrical collector terminal and an electrode assembly are connected, an electrode assembly accommodating step for accommodating the electrode assembly in an inside of a shrink pack that includes an upper opening and that is formed in a bag shape, an electrolytic solution liquid injection step for injecting an electrolytic solution to the inside of the shrink pack, an electrolytic solution osmosing step for making the electrolytic solution osmose to an inside of the electrode assembly, and a shrink pack heat-shrinking step for making the shrink pack be subjected to a heat shrink.

## Description

### BACKGROUND

The present disclosure relates to a method for manufacturing a secondary battery and the secondary battery.

### [Background Art]

A secondary battery is suitably used as a power supply for driving which is mounted on a vehicle, such as hybrid vehicle (HEV), plug-in hybrid vehicle (PHEV), and battery electric vehicle (BEV). When the secondary battery is used, a vibration may be applied from an outside. Thus, for the secondary battery, a resistant property (a vibration resistant property) against the vibration from the outside is required_{∘} As a technique for enhancing the vibration resistant property of the secondary battery, it is possible to use, for example, a technique as described in Japanese Patent Application No. 2013-246933. Japanese Patent Application No. 2013-246933 discloses a battery that includes a power generating element (an electrode assembly), a positive electrode current collector body (a positive electrode electrical collector terminal), a negative electrode current collector body (a negative electrode electrical collector terminal), a nonaqueous electrolytic solution, and a battery case. Japanese Patent Application No. 2013-246933 describes that, by bundling the power generating element, the positive electrode current collector body, and the negative electrode current collector body with a shrink tube being a seamless tube, the vibration resistant property can be enhanced.

### SUMMARY

In Japanese Patent Application No. 2013-246933, osmose of a nonaqueous electrolytic solution is performed after the shrink tube is subjected to a heat shrink. Based on a study of the present inventor, the technique as described above would have an electrode assembly covered with a shrink tube, and thus it becomes difficult to osmose an inside of an electrode assembly with the electrolytic solution.

The herein disclosed technique has been made in view of the above-described circumstances, and has an object to provide a method for manufacturing a secondary battery and provide the secondary battery that has a vibration resistant property and includes an electrode assembly whose inside is sufficiently osmosed with an electrolytic solution.

The technique disclosed herein relates to a method for manufacturing a secondary battery, and includes an assembly producing step for producing an assembly in which an electrical collector terminal and an electrode assembly are connected, an electrode assembly accommodating step for accommodating the electrode assembly in an inside of a shrink pack that is formed in a bag shape and that includes an upper opening, an electrolytic solution liquid injection step for injecting an electrolytic solution into the inside of the shrink pack, an electrolytic solution osmosing step for osmosing the electrolytic solution to an inside of the electrode assembly, and a shrink pack heat-shrinking step for making the shrink pack be subjected to a heat shrink.

In the above described manufacturing method, the electrolytic solution is injected into an inside of a shrink pack formed in a bag shape, and the inside of the electrode assembly is osmosed with the electrolytic solution. This leads to osmose the electrode assembly inside with the electrolytic solution. Then, by making the shrink pack be subjected to a heat shrink, the electrical collector terminal and the electrode assembly are fixed by the shrink pack. This leads to provide the secondary battery that has the vibration resistant property and that includes the electrode assembly whose inside is sufficiently osmosed with the electrolytic solution.

### BRIEF DESCRIPTION OF THE DRAWINGS

FIG. 1 is a perspective view that schematically shows a secondary battery in accordance with one embodiment.
FIG. 2 is a longitudinal cross section view that is schematically shown along a II-II line of FIG. 1.
FIG. 3 is a longitudinal cross section view that is schematically shown along a III-III line of FIG. 1.
FIG. 4 is a flow chart that shows a method for manufacturing the secondary battery in accordance with one embodiment.
FIG. 5 is a schematic view that is for explaining a situation of an electrode assembly accommodating step in accordance with one embodiment.
FIG. 6 is a FIG. 2 correspondence view of a secondary battery in accordance with a first modified example.

### DETAILED DESCRIPTION

Below, while suitably referring to drawings, some preferred embodiments of the herein disclosed technique would be explained. The matters other than matters particularly mentioned in this specification, and required for implementing the present disclosure (for example, a general configuration and a manufacture process of a secondary battery, which do not characterize the present disclosure) can be grasped as design matters of those skilled in the art based on the related art in the present field. The technique disclosed herein can be implemented on the basis of contents disclosed in the present specification and a common general technical knowledge in this technical field.

Incidentally, in the following accompanying drawings, the members/parts providing the same effect are provided with the same numerals and signs, and an overlapped explanation may be omitted or simplified. In addition, a wording "A to B" representing a range in the present specification is to semantically cover a meaning of being equal to or more than A and not more than B, and further cover meanings of being "preferably more than A" and "preferably less than B" Additionally, in the present specification, the wording "secondary battery" (hereinafter, which may be simply referred to as "battery", too) represents a general electricity storage device that can repeatedly perform an electric charge and electric discharge by moving a charge carrier between a positive electrode and a negative electrode through an electrolytic solution.

Below, after a configuration of a secondary battery 100 disclosed herein is explained, a method for manufacturing the secondary battery disclosed herein would be explained. Incidentally, in explanation described below, reference signs L, R, F, Rr, U, and D in drawings respectively represent left, right, front, rear, up, and down. In drawings, reference signs X, Y, and Z respectively represent a long side direction of the secondary battery 100, a short side direction orthogonal to the long side direction, and a vertical direction orthogonal to the short side direction and the long side direction. However, these directions are for convenience sake of explanation, and thus they are not intended at all to restrict a disposed aspect of the secondary battery 100.

### <Secondary battery>

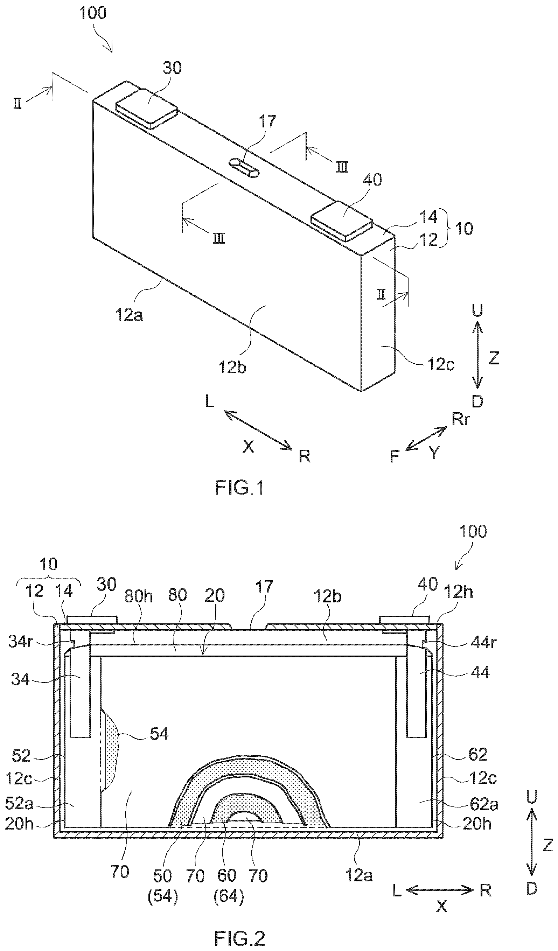

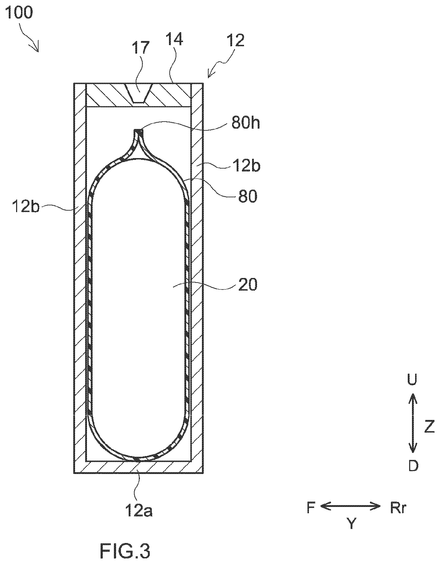

FIG. 1 is a perspective view that schematically shows the secondary battery 100 in accordance with one embodiment. FIG. 2 is a longitudinal cross section view that is schematically shown along a II-II line of FIG. 1. FIG. 3 is a longitudinal cross section view that is schematically shown along a III-III line of FIG. 1. As shown in FIG. 1 and FIG. 2, the secondary battery 100 includes a battery case 10, an electrode assembly 20, a positive electrode electrical collector terminal 34, a negative electrode electrical collector terminal 44, a shrink pack 80, and an electrolytic solution (not shown). The secondary battery 100 is characterized by including the shrink pack 80 disclosed herein, and the other configurations may be similar to conventional configurations. Below, a particular configuration of the secondary battery 100 will be described.

The battery case 10 is a housing that is configured to accommodate the electrode assembly 20, the shrink pack 80, and the electrolytic solution. As shown in FIG. 1 and FIG. 2, the battery case 10 has an outer appearance that is formed in a flat and bottomed rectangular parallelepiped shape (a square shape). As shown in FIG. 2, herein, the battery case 10 includes an outer case 12 configured to have an opening 12h and includes a sealing plate (a lid body) 14 configured to cover the opening 12h. It is preferable that the battery case 10 is formed in a square shape. A material of the battery case 10 may be the same as a material being conventionally used, and is not particularly restricted. It is preferable that the battery case 10 is made of metal, and it is more preferable that, for example, the battery case is made of aluminum, aluminum alloy, iron, iron alloy, or the like.

As shown in FIG. 1, the outer case 12 here includes a bottom surface 12a, a pair of wide width surfaces 12b configured to extend from the bottom surface 12a and to be opposed mutually, and a pair of narrow width surfaces 12c configured to extend from the bottom surface 12a and to be opposed mutually. The bottom surface 12a is formed in an approximately rectangular shape. The bottom surface 12a is opposed to the opening 12h (see FIG. 2). The sealing plate 14 is attached to the outer package 12 to cover the opening 12h of the outer package 12. The sealing plate 14 is opposed to the bottom surface 12a of the outer case 12. The sealing plate 14 is approximately rectangular in a plane view. The battery case 10 is integrated by making the sealing plate 14 be joined (for example, be welded and joined) to a peripheral edge of the opening 12h of the outer case 12.

As shown in FIG. 1 and FIG. 2, herein, the sealing plate 14 is provided with a gas exhausting valve 17. The gas exhausting valve 17 is a thin-walled part that is configured to be broken when a pressure inside the battery case 10 becomes equal to or more than a predetermined value, so as to exhaust the gas inside the battery case 10 to an outside. Incidentally, the gas exhausting valve 17 is provided on the sealing plate 14 in the present embodiment, but the gas exhausting valve 17 may be provided on the outer case 12 in another embodiment.

As shown in FIG. 1 and FIG. 2, herein, each of the positive electrode terminal 30 and the negative electrode terminal 40 is attached to the sealing plate 14. While described in detail, the positive electrode terminal 30 is attached to one end (a left end part in FIG. 2) of the sealing plate 14 in the long side direction X. The negative electrode terminal 40 is attached to the other end (a right end part in FIG. 2) of the sealing plate 14 in the long side direction X. Incidentally, in the present embodiment, the positive electrode terminal 30 and the negative electrode terminal 40 are provided on the sealing plate 14, but in another embodiment, the positive electrode terminal 30 and the negative electrode terminal 40 may be provided on the outer case 12.

As shown in FIG. 2, one end of the positive electrode terminal 30 is exposed to a surface of an outer side of the battery case 10. On the other hand, the other end of the positive electrode terminal 30 is electrically connected to the electrode assembly 20 at the inside of the battery case 10 via the positive electrode electrical collector terminal 34. One end of the negative electrode terminal 40 is exposed to the surface of the outer side of the battery case 10. On the other hand, the other end of the negative electrode terminal 40 is electrically connected to the electrode assembly 20 at the inside of the battery case 10 via the negative electrode electrical collector terminal 44. It is preferable that the positive electrode terminal 30 is formed with a metal superior to an electrically conductive property, for example, an aluminum or an aluminum alloy. In addition, it is preferable that the negative electrode terminal 40 is formed with a metal superior to the electrically conductive property, for example, a copper or a copper alloy.

Herein, each of the positive electrode terminal 30 and the negative electrode terminal 40 is electrically insulated from the battery case 10 (herein, the sealing plate 14) by a gasket (not shown) and an insulator (not shown). The gasket and the insulator can be configured with a resin material having an electrically insulating property, for example, a fluorinated resin, such as perfluoroalkoxy fluorine resin (PFA) and polytetrafluoroethylene (PTFE), a polyphenylene sulfide resin (PPS), a polypropylene (PP), or the like.

The positive electrode electrical collector terminal 34 is attached to a positive electrode active material layer non-formation part 52a of the positive electrode current collector body 52, and is a member that configures a conduction path electrically connecting the positive electrode 50 and the positive electrode terminal 30. A material of the positive electrode electrical collector terminal 34 is not particularly restricted, and thus it is possible to use a metal material capable of being used for an electrical collector terminal of a conventional secondary battery, without particular restriction. It is preferable that the positive electrode electrical collector terminal 34 is configured with the same kind of metal material as the positive electrode current collector body 52, for example, configured with an electrically conductive metal, such as aluminum, aluminum alloy, nickel, and stainless steel. The positive electrode electrical collector terminal 34 is an example of "electrical collector terminal" disclosed herein.

As shown in FIG. 2, the positive electrode electrical collector terminal 34 includes a long plate-shaped base part configured to extend in the vertical direction Z. One end of the positive electrode electrical collector terminal 34 (a lower end part of the positive electrode electrical collector terminal 34 in FIG. 2) is electrically connected to the positive electrode active material layer non-formation part 52a of the positive electrode current collector body 52. The other end of the positive electrode electrical collector terminal 34 is electrically connected to the positive electrode terminal 30 at the inside of the battery case 10.

The negative electrode electrical collector terminal 44 is attached to a negative electrode active material layer non-formation part 62a of the negative electrode current collector body 62, and is a member that configures a conduction path electrically connecting the negative electrode 60 and the negative electrode terminal 40. A material of the negative electrode electrical collector terminal 44 is not particularly restricted, and thus it is possible to use a metal material capable of being used for an electrical collector terminal of a conventional secondary battery, without particular restriction. It is preferable that the negative electrode electrical collector terminal 44 is configured with the same kind of metal material as the negative electrode current collector body 62, for example, configured with an electrically conductive metal, such as copper, copper alloy, nickel, and stainless steel. The negative electrode electrical collector terminal 44 is an example of "electrical collector terminal" disclosed herein.

As shown in FIG. 2, the negative electrode electrical collector terminal 44 includes a base part that is formed in a plate shape extending in the vertical direction Z. One end of the negative electrode electrical collector terminal 44 (the lower end part of the negative electrode electrical collector terminal 44 in FIG. 2) is electrically connected to the negative electrode active material layer non-formation part 62a of the negative electrode current collector body 62. The other end of the negative electrode electrical collector terminal 44 is electrically connected to the negative electrode terminal 40 at the inside of the battery case 10.

As shown in FIG. 2, herein, the positive electrode electrical collector terminal 34 includes a recessed part 34r that is configured to direct inward from an outer side surface of the positive electrode electrical collector terminal 34 (a left side in FIG. 2). The recessed part 34r is arranged to be opposed to the shrink pack 80 described later. The negative electrode electrical collector terminal 44 includes a recessed part 44r that is configured to direct inward from an outer side surface of the negative electrode electrical collector terminal 44 (a right side in FIG. 2). The recessed part 44r is arranged to be opposed to the shrink pack 80 described later. In some preferred embodiments, it is preferable that the electrical collector terminal (the positive electrode electrical collector terminal 34 and the negative electrode electrical collector terminal 44) includes the recessed part directed inward from the outer side surface of the electrical collector terminal. The recessed parts 34r, 44r are examples of the herein disclosed "recessed part that is configured to direct inward from an outer side surface of an electrical collector terminal". The later described shrink pack 80 is arranged to cover at least a part of each of recessed parts 34r, 44r. By doing this, the described later shrink pack 80 and the positive electrode electrical collector terminal 34 are suitably fixed, and the shrink pack 80 and the negative electrode electrical collector terminal 44 are suitably fixed. In other words, when the secondary battery 100 is used, it is possible to suitably inhibit the shrink pack 80 from deviating. However, the recessed parts 34r, 44r are not always required, and in another embodiment, neither the positive electrode electrical collector terminal 34 nor the negative electrode electrical collector terminal 44 may include the recessed part. In addition, any one of the positive electrode electrical collector terminal 34 and the negative electrode electrical collector terminal 44 may include the recessed part 34r, 44r.

As shown in FIG. 2, in the present embodiment, shapes of the recessed parts 34r, 44r are rectangular. However, the shapes of the recessed parts 34r, 44r are not restricted to them. For example, each shape of the recessed parts 34r, 44r may be a V-shape, a U-shape, a semicircular shape, or the like.

Maximum depths of the recessed parts 34r, 44r (herein, a maximum value of a depth from the outer side surface of the positive electrode electrical collector terminal 34 to the recessed part 34r when viewed in the X direction, or a maximum value of a depth from the outer side surface of the negative electrode electrical collector terminal 44 to the recessed part 44r) may be, for example, equal to or more than 1 mm, is preferably equal to or more than 1.5 mm, or is further preferably equal to or more than 2 mm. This leads to suitably fix the positive electrode electrical collector terminal 34 and the negative electrode electrical collector terminal 44 onto the shrink pack 80. From a perspective of securing strengths of the positive electrode electrical collector terminal 34 and the negative electrode electrical collector terminal 44, the maximum depths h1 of the recessed parts 34r, 44r are, for example, equal to or less than 1/2 of widths of the positive electrode electrical collector terminal 34 and the negative electrode electrical collector terminal 44, preferably equal to or less than 1/3, or further preferably equal to or less than 1/4.

As shown in FIG. 2, in the present embodiment, one recessed part 34r and one recessed part 44r are respectively formed on the outer side surfaces of the positive electrode electrical collector terminal 34 and the negative electrode electrical collector terminal 44. However, the present disclosure is not restricted to this. Plural recessed parts 34r and plural recessed parts 44r may be formed respectively on the outer side surfaces of the positive electrode electrical collector terminal 34 and the negative electrode electrical collector terminal 44. In addition, it is preferable that the recessed parts 34r, 44r are arranged at points on the outer side surfaces of the positive electrode electrical collector terminal 34 and the negative electrode electrical collector terminal 44 where at least a part of the shrink pack 80, after the heat shrink, is covered by the recessed parts 34r, 44r.

The electrode assembly 20 is a power generating element of the secondary battery 100. As shown in FIG. 2, the electrode assembly 20 includes openings 20h at both ends in the width direction (the Y direction in FIG. 2). The electrode assembly 20 is arranged at the inside of the battery case 10, in a state where the outer surface of the electrode assembly 20 is covered (coated) by the later described shrink pack 80. As shown by FIG. 3, in the present embodiment, one electrode assembly is accommodated inside the battery case 10. However, the number of the electrode assemblies 20 accommodated inside one battery case 10 is not particularly restricted, and the plural (2 or more) electrode assemblies 20 may be accommodated in a state where each electrode assembly is coated by the shrink pack 80.

The electrode assembly 20 here is a wound electrode assembly that is configured by making the strip-like shaped positive electrode 50 and the strip-like shaped negative electrode 60 be stacked one on another via 2 strip-like shaped separators 70 and then by winding the resultant in the longitudinal direction and thus that is formed in a flat shape. However, the electrode assembly may be a laminate type electrode assembly in which the rectangular positive electrode and the rectangular negative electrode are alternately laminated via the rectangular separator. In addition, the electrode assembly may be a laminate type electrode assembly that is configured by making the plural positive electrodes and the plural negative electrodes be interposed into the separator being folded in a zigzag pattern. In some suitable embodiment aspects, it is preferable that the electrode assembly 20 is the wound electrode assembly.

The positive electrode 50 includes the positive electrode current collector body 52 formed in a strip-like shape and includes a positive electrode active material layer 54 fixed on at least one surface of the positive electrode current collector body 52. As shown in FIG. 2, herein, the positive electrode 50 comprises a configuration in which the positive electrode active material layer 54 is formed on one surface or both surfaces (herein, on both surfaces) of the long positive electrode current collector body 52 along the longitudinal direction. Herein, the positive electrode active material layer non-formation part 52a (in other words, a portion where the positive electrode active material layer 54 is not formed and thus the positive electrode current collector body 52 is exposed) is formed to protrude outwardly from a left edge of the electrode assembly 20 in a winding axis direction (in other words, a sheet width direction being orthogonal to the longitudinal direction).

As each of members configuring the positive electrode 50, it is possible to use a conventionally known material which can be used for a general battery (for example, a lithium ion secondary battery), without particularly restriction. For example, it is preferable that the positive electrode current collector body 52 is, for example, made from an electrically conductive metal, such as aluminum, aluminum alloy, nickel, and stainless steel. The positive electrode active material layer 54 contains a positive electrode active material (for example, a lithium-transition metal complex oxide, such as lithium-nickel-cobalt-manganese composite oxide) that can reversibly store and release a charge carrier. The positive electrode active material layer 54 may contain an arbitrary component other than the positive electrode active material, for example, an electrical conducting material, a binder, various additive components, or the like. As the electrical conducting material, it is possible to use, for example, a carbon material, such as acetylene black (AB). As the binder, it is possible to use, for example, polyvinylidene fluoride (PVDF), or the like.

The negative electrode 60 includes the negative electrode current collector body 62 formed in a strip-like shape and includes a negative electrode active material layer 64 fixed on at least one surface of the negative electrode current collector body 62. As shown in FIG. 2, herein, the negative electrode 60 comprises a configuration in which the negative electrode active material layer 64 is formed on one surface or both surfaces (herein, on both surfaces) of the long negative electrode current collector body 62 along the longitudinal direction. The negative electrode active material layer non-formation part 62a (in other words, a portion where the negative electrode active material layer 64 is not formed and thus the negative electrode current collector body 62 is exposed) is formed to protrude outwardly from a right edge of the electrode assembly 20 in a winding axis direction (in other words, the sheet width direction being orthogonal to the longitudinal direction).

As each of members configuring the negative electrode 60, it is possible to use a conventionally known material which can be used for the general battery (for example, the lithium ion secondary battery), without particularly restriction. For example, it is preferable that the negative electrode current collector body 62 is configured with an electrically conductive metal, such as copper, copper alloy, nickel, and stainless steel. The negative electrode active material layer 64 contains a negative electrode active material (for example, a carbon material, such as graphite) that can reversibly store and release a charge carrier. The negative electrode active material layer 64 may contain an arbitrary component other than the negative electrode active material, for example, an electrical conducting material, a binder, a dispersing agent, a thickening agent, various additive components, or the like. As the binder, for example, rubbers, such as styrene butadiene rubber (SBR) can be used. As the dispersing agent, for example, celluloses, such as carboxymethyl cellulose (CMC) can be used.

The separator 70 is a member configured to establish an insulation between the positive electrode active material layer and the negative electrode active material layer. As the separator 70, for example, a porous resin sheet is suitable that consists of a polyolefin resin, such as polyethylene (PE) and polypropylene (PP). On a surface of the separator 70, a heat resistance layer (HRL) containing an inorganic filler may be provided. As the inorganic filler, for example, it is possible to use alumina, boehmite, aluminum hydroxide, titania, or the like.

The electrolytic solution is accommodated inside the shrink pack 80 together with the electrode assembly 20. Typically, the electrolytic solution osmoses to the inside of the electrode assembly 20 (an electrode gap between the positive electrode 50 and the negative electrode 60). However, it is not necessarily that a whole of the electrolytic solution osmoses to the inside of the electrode assembly 20, and thus it is good even if a part of the electrolytic solution is present as an excess electrolytic solution at the outside of the electrode assembly 20. In that case, typically, the excess electrolytic solution is present between the shrink pack 80 and the outer surface of the electrode assembly 20. The electrolytic solution may be similar to the general secondary battery, and is not particularly restricted. The electrolytic solution is typically a nonaqueous-type liquid electrolyte (nonaqueous electrolytic solution) that contains a nonaqueous solvent and a supporting salt. The nonaqueous solvent contains, for example, carbonates, such as ethylene carbonate (EC), ethyl methyl carbonate (EMC), and dimethyl carbonate (DMC). It is preferable that the nonaqueous solvent contains the EC, the EMC, and the DMC to have a total ratio being 100%, each of which is mixed within a range being 1 to 99%. As the supporting salt, it is possible to use, for example, a fluorine-containing lithium salt, or the like. It is preferable that the fluorine-containing lithium salt contains lithium hexafluorophosphate (LiPF₆), lithium bis(fluorosulfonyl)imide (F₂LiNO₄S₂) referred to as LiFSI, or a mixture of them. It is preferable that a concentration of the supporting salt is made to be 0.6 to 1.8 mol for 1 L of the nonaqueous solvent.

The shrink pack 80 is accommodated inside the battery case 10 together with the electrode assembly 20. The shrink pack 80 is arranged between the battery case 10 and the electrode assembly 20. As shown in FIG. 3, the shrink pack 80 herein is a member with a bottom that can accommodate the electrode assembly 20. As shown in FIG. 3, the shrink pack 80 is configured to coat the outer surface of the electrode assembly 20 by subjecting the shrink pack itself to the heat shrink. The shrink pack 80 is arranged to cover the openings 20h at the both ends (the left edge and the right edge of FIG. 2) of the electrode assembly 20. Further, the shrink pack 80 is arranged to cover a part of the positive electrode electrical collector terminal 34 and the negative electrode electrical collector terminal 44. By doing this, the electrode assembly 20 and each of the positive electrode electrical collector terminal 34 and the negative electrode electrical collector terminal 44 are fixed. As shown in FIG. 2 and 3, herein, the shrink pack 80 includes an opening 80h at a top end part. The opening 80h of the shrink pack 80 may be not changed, or may be in a state of being sealed by a heat seal, or the like. As shown in FIG. 3, herein, the opening 80h of the shrink pack 80 is not sealed. In a case where the laminate type electrode assembly is used as the electrode assembly 20, it is preferable that the opening 80h of the shrink pack 80 is sealed. This leads to suitably hold the electrolytic solution inside the electrode assembly 20. However, it is not necessary to completely seal the opening 80h of the shrink pack 80. From a perspective of releasing the gas, generated at the time of using the secondary battery 100, to the outside of the shrink pack 80, it is preferable that at least a part of the opening 80h is not sealed. For example, of the opening 80h, a portion where the positive electrode electrical collector terminal 34 and the negative electrode electrical collector terminal 44 are covered by the shrink pack 80 is not required to be sealed.

As the shrink pack 80, for example, it is possible to use a heat shrinkable resin, such as polyethylene (PE), polypropylene (PP), polyolefin, vinyl chloride (PVC), polyethylene terephthalate (PET), and fluorinated resin. Among them, it is possible as the shrink pack 80 to suitably use the PET.

The herein disclosed secondary battery 100 includes the shrink pack 80 configured to coat the outer surface of the electrode assembly 20, and thus can hold the electrolytic solution inside the electrode assembly 20. In detail, at the time of using the secondary battery 100, the electrode assembly 20 may be subjected to expansion and contraction in a thickness direction because of a temperature condition, a SOC (State of Charge) condition, or the like. By the expansion and contraction described above, there are some fears that the electrolytic solution present inside the electrode assembly 20 is pushed out from the opening 20h of the electrode assembly 20 to the outside of the electrode assembly 20 and that a sufficient amount of the electrolytic solution cannot be held inside the electrode assembly 20. Regarding the secondary battery 100 of the present embodiment, the opening 20h of the electrode assembly 20 is covered by the shrink pack 80. Thus, even in a case where the expansion and contraction is caused on the electrode assembly 20, it is possible to inhibit the electrolytic solution inside the electrode assembly 20 from outflowing to the outside.

In addition, regarding the herein disclosed secondary battery 100, the electrode assembly 20 and each of the positive electrode electrical collector terminal 34 and the negative electrode electrical collector terminal 44 are fixed by the shrink pack 80. By doing this, movement of the electrode assembly 20 inside the battery case 10 can be suppressed, for example, even in a case where a vibration or an impact (an external force) is applied at the time of using the secondary battery 100, and thus it is possible to suppress the electrode assembly 20 from being broken. Additionally, in a case where the secondary battery 100 includes the recessed parts 34r, 44r, the shrink pack 80 and each of the positive electrode electrical collector terminal 34 and the negative electrode electrical collector terminal 44 are further surely fixed. At the time of using the secondary battery 100, it is possible to suppress the shrink pack 80 from deviating.

The secondary battery 100 can be used for various purposes. A suitable application purpose is to use as a power supply for driving which is mounted on a vehicle, such as Battery Electric Vehicle (BEV), Hybrid Electric Vehicle (HEV), and Plug-in Hybrid Electric Vehicle (PHEV). In addition, the secondary battery 100 can be used as a storage battery, such as small electric power storing apparatus. Regarding the secondary battery 100, typically, it is possible to use as a battery pack form in which plural secondary batteries are connected in series and/or in parallel.

Incidentally, as an example, the square-shaped secondary battery 100 has been explained that includes the electrode assembly 20 having a flat-shaped wound structure. However, the herein disclosed secondary battery is not restricted to the shape described above. For example, additionally, the secondary battery in accordance with the present embodiment can be constructed to have a form, such as cylindrical secondary battery and coin type secondary battery.

### <Method for manufacturing secondary battery>

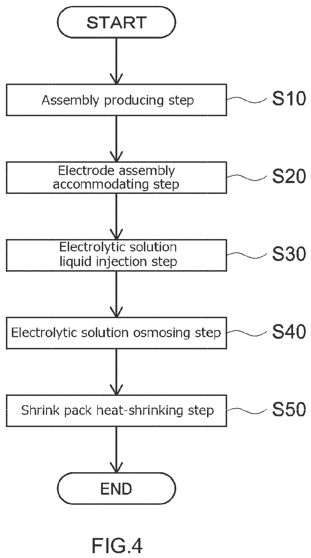

Next, a method for manufacturing the secondary battery 100 disclosed herein will be described. FIG. 4 is a flow chart that shows the method for manufacturing the secondary battery 100 in accordance with one embodiment. The herein disclosed manufacturing method includes an assembly producing step S10, an electrode assembly accommodating step S20, an electrolytic solution liquid injection step S30, an electrolytic solution osmosing step S40, and a shrink pack heat-shrinking step S50. Incidentally, the herein disclosed manufacturing method is characterized by the electrolytic solution liquid injection step and the shrink pack heat-shrinking step, and the other manufacture processes may be similar to conventional ones. It may further include another step at an arbitrary stage. In addition, as the material used for manufacturing the secondary battery 100, it is possible to use one as described above, and thus overlapping explanations are omitted here.

### (Assembly producing step S10)

At the assembly producing step S10, an assembly in which the electrical collector terminal and the electrode assembly are connected is produced. Incidentally, in the present specification, the wording "assembly" represents a construction including the electrical collector terminal and the electrode assembly. The assembly produced in the present embodiment includes the positive electrode electrical collector terminal 34, the negative electrode electrical collector terminal 44, and the electrode assembly 20.

At the assembly producing step S10, as shown in FIG. 2, a positive electrode current collector body exposed part (a positive electrode active material layer non-formation part 52a) of the electrode assembly 20 and the positive electrode electrical collector terminal 34 are joined. On the other hand, a negative electrode current collector body exposed part (a negative electrode active material layer non-formation part 62a) of the electrode assembly 20 and the negative electrode electrical collector terminal 44 are joined. The join described above can be performed, for example, by a conventionally known method (for example, ultrasonic joining, resistance welding, laser welding, or the like). By doing this, the electrode assembly 20, the positive electrode electrical collector terminal 34, and the negative electrode electrical collector terminal 44 are integrated.

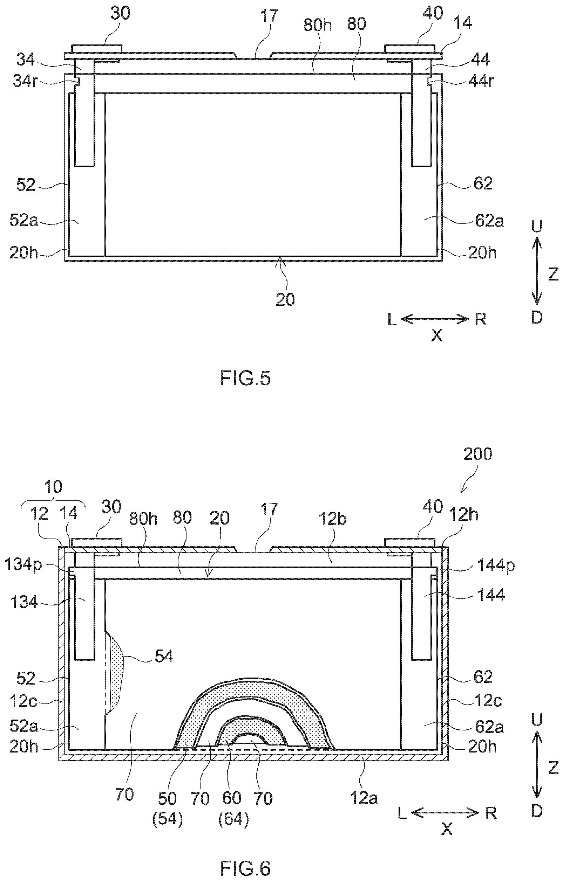

Although not restricted to this, in the present embodiment, it is possible after the assembly producing step S10 to further integrate the assembly produced above and the sealing plate 14. At first, the sealing plate 14 on which the positive electrode terminal 30 and the negative electrode terminal 40 are attached is prepared (see FIG. 5). Then, the positive electrode terminal 30 and the positive electrode electrical collector terminal 34, and, the negative electrode terminal 40 and the negative electrode electrical collector terminal 44 are joined by a conventionally known method (for example, the ultrasonic joining, the resistance welding, the laser welding, or the like). By doing this, the positive electrode terminal 30 is electrically connected to the electrode assembly 20 via the positive electrode electrical collector terminal 34. In addition, the negative electrode terminal 40 is electrically connected to the electrode assembly 20 via the negative electrode electrical collector terminal 44. By doing this, the assembly and the sealing plate 14 are integrated. However, it is not required to perform the connection of the positive electrode terminal 30 and the positive electrode electrical collector terminal 34, and the connection of the negative electrode terminal 40 and the negative electrode electrical collector terminal 44 just after the assembly producing step S10, and thus it is enough to perform them at an arbitrary timing if the timing is before the sealing plate 14 is sealed to the outer case 12.

### (Electrode assembly accommodating step S20)

At the electrode assembly accommodating step S20, the electrode assembly 20 is accommodated inside the bag-shaped shrink pack 80 having the opening 80h at an upper part. The assembly producing step S10 has been already performed on the electrode assembly 20, and thus the electrode assembly is in a state of being an assembly to which the positive electrode electrical collector terminal 34 and the negative electrode electrical collector terminal 44 are joined.

FIG. 5 is a schematic view that is for explaining a situation of the electrode assembly accommodating step S20 in accordance with one embodiment. As shown by FIG. 5, in the present embodiment, the positive electrode electrical collector terminal 34 and the negative electrode electrical collector terminal 44 are in a state of being integrated with the sealing plate 14 via the positive electrode terminal 30 and the negative electrode terminal 40.

The shrink pack 80 prepared at the electrode assembly accommodating step S20 (in other words, the shrink pack 80 before the shrink pack heat-shrinking step) is typically a bag-shaped member including the opening 80h at the upper part. Incidentally, in the present specification, the wording "bag-shaped" is a concept that represents a bottomed shape capable of accommodating the electrolytic solution and that semantically covers, for example, not only the bottomed cylindrical shape, but also a shape having a gusset part at the bottom part, a box-like shape, and the like. As shown in FIG. 5, herein, the shrink pack 80 is formed in a cylindrical shape with a bottom.

At the electrode assembly accommodating step S20, through the opening 80h of the shrink pack 80, the electrode assembly 20 is accommodated. As shown in FIG. 5, at that time, the electrode assembly 20 is arranged to make the openings 20h of the both ends of the electrode assembly 20 be opposed to the shrink pack 80. Herein, to make the width direction of the opening 80h of the shrink pack 80 and the winding axis of the electrode assembly 20 be approximately parallel to each other, the electrode assembly 20 is arranged. Of the positive electrode electrical collector terminal 34 and the negative electrode electrical collector terminal 44, a part containing the connection part to the electrode assembly 20 is accommodated together with the electrode assembly 20 in the shrink pack 80. On the other hand, a part of the positive electrode electrical collector terminal 34 and the negative electrode electrical collector terminal 44 is arranged to be exposed upward from the opening 80h of the shrink pack 80. In a case where the positive electrode electrical collector terminal 34 and the negative electrode electrical collector terminal 44 include recessed parts 34r, 44r, it is preferable that the positive electrode electrical collector terminal 34 and the negative electrode electrical collector terminal 44 are accommodated to make the opening 80h of the shrink pack 80 be positioned at an upward site more than top end parts of the recessed parts 34r, 44r (in other words, to cover the recessed parts 34r, 44r). This leads to become easy to make the shrink pack 80 cover the recessed parts 34r, 44r at the later shrink pack heat-shrinking step.

A size and a shape of the shrink pack 80 prepared at the electrode assembly accommodating step S20 can be suitably adjusted on the basis of the size of the electrode assembly 20, the shape of the battery case 10, or the like, and thus they are not particularly restricted. It is preferable that the shrink pack 80 before the heat shrink has a dimensional allowance (a clearance) after accommodating the electrode assembly 20. This leads to become easy to make the electrode assembly 20 accommodate the shrink pack 80. In addition, at a later described electrolytic solution osmosing step S40, it becomes easy to make the electrolytic solution osmose to the inside of the electrode assembly 20.

A thickness of the shrink pack 80, before the heat shrink, can be adjusted on the basis of, for example, the size of the electrode assembly 20, an injection liquid amount of the electrolytic solution, or the resin configuring the shrink pack 80. From a perspective of making a strength of the shrink pack 80 after the heat shrink have a sufficient strength, the thickness of the shrink pack 80 before the heat shrink is preferably equal to or more than 30 µm, or further preferably equal to or more than 50 µm. On the other hand, from a perspective of a production efficiency of the secondary battery 100, or the like, the thickness of the shrink pack 80 before the heat shrink is preferably equal to or less than 200 µm, or further preferably equal to or less than 150 µm.

### (Electrolytic solution liquid injection step S30)

At the electrolytic solution liquid injection step S30, the electrolytic solution is injected from the opening 80h of the shrink pack 80 to the inside of the shrink pack 80. By doing this, compared to a case where the electrolytic solution is directly injected into the battery case 10, it is possible even with a small injection liquid amount of the electrolytic solution to make the electrolytic solution osmose to the inside of the electrode assembly 20 by the later described electrolytic solution osmosing step S40. The electrolytic solution liquid injection step S30 may be performed under the atmospheric pressure, or may be performed, for example, under a reduced pressure environment, such as inside a chamber whose pressure can be adjusted.

It is preferable that the electrolytic solution liquid injection step S30 is performed after the electrode assembly accommodating step S20 (in other words, under a state where the electrode assembly 20 is accommodated in the shrink pack 80 before the heat shrink). However, the present disclosure is not restricted to this, the electrolytic solution liquid injection step S30 may be performed at a timing before the electrode assembly accommodating step S20 (in other words, under a state where the electrode assembly 20 is not accommodated in the shrink pack 80 before the heat shrink).

### (Electrolytic solution osmosing step S40)

At the electrolytic solution osmosing step S40, the electrode assembly 20 accommodated inside the shrink pack 80 is osmosed with the electrolytic solution. Herein, the shrink pack 80 is in a state before the heat shrink. In other words, it is a state before the opening 20h of the electrode assembly 20 is covered by the shrink pack 80. Thus, it becomes easy to make the electrolytic solution osmose through the opening 20h of the electrode assembly 20.

At the electrolytic solution osmosing step S40, it is preferable that the electrode assembly 20 accommodated inside the shrink pack 80 is accommodated in the chamber capable of adjusting the pressure and then subjected under a reduced pressure condition. By doing this, the pressure at the inside of the electrode assembly 20 (the electrode gap between the positive electrode 50 and the negative electrode 60) becomes negative, and thus the electrolytic solution is sucked to the inside of the electrode assembly 20 having the negative pressure. Therefore, it is possible to make the electrolytic solution efficiently osmose to the inside of the electrode assembly 20. In addition, it is possible to shorten the time required for the electrolytic solution osmosing step S40.

In a case where the electrolytic solution osmosing step S40 is performed under the reduced pressure condition, an internal pressure inside the chamber is preferably equal to or less than -50 kPa, or further preferably equal to or less than -80 kPa. This leads to shorten the time required for the electrolytic solution osmosing step S40. On the other hand, in a case where the pressure inside the reduced pressure chamber is reduced, a lower limit value of the pressure during the reduced pressure processing is not particularly restricted if the reduced pressure chamber is not broken. For example, the lower limit value of the pressure inside the reduced pressure chamber may be equal to or more than -100 kPa.

Incidentally, the reduced pressure processing at the electrolytic solution osmosing step S40 is not always required, and in addition, continuing the reduced pressure processing is not required. For example, at the electrolytic solution osmosing step S40, an increased pressure processing in addition to the reduced pressure processing may be repeatedly performed. This leads to promote osmosing the electrolytic solution into the inside of the electrode assembly 20.

In a case where the increased pressure processing is performed at the electrolytic solution osmosing step S40, the internal pressure inside the chamber is, for example, preferably equal to or more than 0.5 MPa, or further preferably equal to or more than 0.8 MPa. An upper limit value of the pressure during the increased pressure processing may be, for example, equal to or less than 1.0 MPa.

After the electrolytic solution osmosing step S40, the opening 80h of the shrink pack 80 may be sealed by the heat seal or the like. This leads to become easy to make the electrolytic solution be held at the inside of the shrink pack 80. In addition, it is possible to further suitably suppress the shrink pack 80 from deviating. Incidentally, it is not always required to completely seal the opening 80h of the shrink pack 80, and only a part of the opening 80h may be sealed. In addition, the sealing may be performed discontinuously. However, the sealing for the shrink pack 80 is not always required, and thus can be omitted.

### (Shrink pack heat-shrinking step S50)

At the shrink pack heat-shrinking step S50, the shrink pack 80 is subjected to the heat shrink. By doing this, the shrink pack 80 shrinks and is arranged to coat the outer surface of the electrode assembly 20. In addition, by the step described above, the openings 20h of the both ends of the electrode assembly 20 are in a state of being covered by the shrink pack 80. In addition, the electrode assembly 20, the positive electrode electrical collector terminal 34, and the negative electrode electrical collector terminal 44 are fixed by the shrink pack 80. This leads to obtain the vibration resistant property and the impact resistant property of the secondary battery 100.

A method for making the shrink pack 80 be subjected to the heat shrink is not particularly restricted, and thus a conventionally known method can be used. For example, the shrink pack 80 accommodating the electrode assembly 20, the positive electrode electrical collector terminal 34, and the negative electrode electrical collector terminal 44 is brought into a shrink furnace. Then, by performing an heating operation in the shrink furnace at a temperature equal to or more than a shrink temperature of the shrink pack 80, it is possible to implement the heat shrink.

In a case where the positive electrode electrical collector terminal 34 and the negative electrode electrical collector terminal 44 include the recessed parts, for example, as shown in FIG. 2, it is preferable that the shrink pack 80 is subjected to the heat shrink so as to make at least a part of the shrink pack 80, after the heat shrink, cover each of the recessed parts 34r, 44r. In other words, it is preferable that the shrink pack 80 is subjected to the heat shrink so as to make at least a part of the shrink pack 80 be hooked on the recessed parts 34r, 44r. By doing this, the shrink pack 80, the positive electrode electrical collector terminal 34, and the negative electrode electrical collector terminal 44 are further firmly fixed. Accordingly, at the time of using the secondary battery 100 after the manufacture, it is possible to further suppress the shrink pack 80 from deviating.

After the shrink pack heat-shrinking step S50, by accommodating the assembly inside the outer case 12 and then by sealing the sealing plate 14, it is possible to manufacture the secondary battery 100. For example, in the present embodiment, the electrode assembly 20 integrated with the sealing plate 14 is inserted from the opening 12h of the outer case 12. Then, peripheral edges of the sealing plate 14 and the opening 12h of the outer case 12 are joined by the laser welding, or the like. By doing this, the battery case 10 is hermetically sealed. In addition, the electrode assembly 20 is fixed to the battery case 10 through the positive electrode electrical collector terminal 34 and the negative electrode electrical collector terminal 44. However, an accommodating method for the assembly described above and a sealing method for the sealing plate 14 may be performed by the conventionally known means, and are not intended to characterize the method for manufacturing the secondary battery disclosed herein.

Above, a preferred embodiment of the present disclosure has been explained, but the above described embodiment is merely an example. The present disclosure can be implemented in various other forms. The present disclosure can be executed based on the contents disclosed in the present specification, and the technical common sense in the present field. The technique recited in the appended claims includes variously deformed or changed versions of the embodiments that have been illustrated above. For example, it is possible to replace a part of the above described embodiment with a different modified example, and a different modified example could be added to the above described embodiment. In addition, unless a technical feature is explained to be essential, this technical feature can be appropriately deleted.

### <First modified example>

FIG. 6 is a FIG. 2 correspondence view of a secondary battery 200 in accordance with a first modified example. The secondary battery 200 in accordance with the first modified example includes a positive electrode electrical collector terminal 134, instead of the positive electrode electrical collector terminal 34. In addition, the secondary battery 200 in accordance with the first modified example includes a negative electrode electrical collector terminal 144, instead of the negative electrode electrical collector terminal 44. The secondary battery 200 may be configured similarly to the secondary battery 100 described above, except for the above described point.

As shown in FIG. 6, the positive electrode electrical collector terminal 134 and the negative electrode electrical collector terminal 144 respectively include protruding parts 134p, 144p, instead of the recessed parts 34r, 44r. The protruding part 134p is formed to be directed outwardly from an outer side surface (a left side of FIG. 6) of the positive electrode electrical collector terminal 134. On the other hand, the protruding part 144p is formed to be directed outwardly from an outer side surface (a right side of FIG. 6) of the negative electrode electrical collector terminal 144. Each of the protruding parts 134p, 144p is arranged to be opposed to the later described shrink pack 80. Herein, the protruding parts 134p, 144p are arranged to make at least a part be covered by the shrink pack 80 after the heat shrink. By doing this, the shrink pack 80 and the positive electrode electrical collector terminal 134, and, the shrink pack 80 and the negative electrode electrical collector terminal 144 are further surely fixed. In other words, at the time of using the secondary battery 200, it is possible to further suppress the shrink pack 80 from deviating. As shown in FIG. 6, herein, the positive electrode electrical collector terminal 134 and the negative electrode electrical collector terminal 144 respectively include the protruding parts 134p, 144p. However, it is good that any one of the positive electrode electrical collector terminal 134 and the negative electrode electrical collector terminal 144 includes the protruding parts 134p, 144p. The protruding parts 134p, 144p are examples of "protruding part configured to be directed outwardly from an outer side surface of the electrical collector terminal" disclosed herein.

As shown in FIG. 6, shapes of the protruding parts 134p, 144p in accordance with the first modified example are rectangular. However, the shapes of the protruding parts 134p, 144p are not restricted to those. For example, the shapes of the protruding parts 134p, 144p may be a V-shape, a U-shape, a semicircular shape, or the like.

Maximum heights of the protruding parts 134p, 144p (herein, a maximum value of a height from the outer side surface of the positive electrode electrical collector terminal 134 to the protruding part 134p when viewed in the X direction, or a maximum value of a height from the outer side surface of the negative electrode electrical collector terminal 144 to the protruding part 144p) may be, for example, equal to or more than 1 mm, preferably equal to or more than 3 mm, or further preferably equal to or more than 4 mm. By doing this, the shrink pack 80 can be suitably fixed to the positive electrode electrical collector terminal 134 and the negative electrode electrical collector terminal 144. On the other hand, from a perspective of interfering with the inner surface of the battery case 10, the maximum heights of the protruding parts 134p, 144p are, for example, equal to or less than 20 mm, preferably equal to or less than 15 mm, or further preferably equal to or less than 10 mm.

As shown in FIG. 6, regarding the protruding parts 134p, 144p in accordance with the first modified example, one is formed on each of the outer side surfaces of the positive electrode electrical collector terminal 134 and the negative electrode electrical collector terminal 144. However, the present disclosure is not restricted to that. On the outer side surfaces of the positive electrode electrical collector terminal 134 and the negative electrode electrical collector terminal 144, plural ones of the protruding parts 134p, 144p may be respectively formed. In addition, on the outer side surfaces of the positive electrode electrical collector terminal 134 and the negative electrode electrical collector terminal 144, recessed parts such as the above described recessed parts 34r, 44r may be further formed in addition to the protruding parts 134p, 144p.

A method for manufacturing the secondary battery 200 in accordance with the first modified example can be manufactured by a method similar to the secondary battery 100 as described above.

In the method for manufacturing the secondary battery 200 in accordance with the first modified example, it is preferable at the electrode assembly accommodating step S20 that the positive electrode electrical collector terminal 134 and the negative electrode electrical collector terminal 144 are accommodated so as to position the opening 80h of the shrink pack 80 upward more than the top end parts of the protruding parts 134p, 144p (in other words, so as to cover the protruding parts 134p, 144p). By doing this, it becomes easy to make the shrink pack cover the protruding parts 134p, 144p at the shrink pack heat-shrinking step S50.

In the method for manufacturing the secondary battery 200 in accordance with the first modified example, it is preferable at the shrink pack heat-shrinking step S50 that the shrink pack 80 is subjected to the heat shrink so as to make at least a part of the shrink pack 80, after the heat shrink, cover each of the protruding parts 134p, 144p. In other words, it is preferable that the shrink pack 80 is subjected to the heat shrink so as to make at least a part of the shrink pack 80 be hooked on the protruding parts 134p, 144p. By doing this, the shrink pack 80 and the positive electrode electrical collector terminal 134 and negative electrode electrical collector terminal 144 are further firmly fixed. Accordingly, at the time of using the secondary battery 200 after the manufacture, it is possible to further suppress the shrink pack 80 from deviating.

While described above, as a particular aspect of the herein disclosed technique, it is possible to use a recitation of each item described below.

Item 1: A method for manufacturing a secondary battery, comprising: an assembly producing step for producing an assembly in which an electrical collector terminal and an electrode assembly are connected; an electrode assembly accommodating step for accommodating the electrode assembly in an inside of a shrink pack that is formed in a bag shape and that comprises an upper opening; an electrolytic solution liquid injection step for injecting an electrolytic solution into the inside of the shrink pack; an electrolytic solution osmosing step for osmosing the electrolytic solution to an inside of the electrode assembly; and a shrink pack heat-shrinking step for making the shrink pack be subjected to a heat shrink.

Item 2: The method for manufacturing the secondary battery recited in item 1, wherein the electrode assembly is accommodated in a chamber capable of adjusting a pressure, and the electrolytic solution osmosing step is performed under a reduced pressure condition.

Item 3: The method for manufacturing the secondary battery recited in item 1 or 2, wherein the electrical collector terminal comprises a recessed part that is directed inwardly from an outer side surface of the electrical collector terminal, and at the shrink pack heat-shrinking step, the shrink pack is subjected to the heat shrink so as to make the shrink pack cover the recessed part.

Item 4: The method for manufacturing the secondary battery recited in any one of items 1 to 3, wherein the electrical collector terminal comprises a protruding part that is directed outwardly from an outer side surface of the electrical collector terminal, and at the shrink pack heat-shrinking step, the shrink pack is subjected to the heat shrink so as to make the shrink pack cover the protruding part.

Item 5: A secondary battery, comprising: an electrode assembly that comprises openings at both ends in a width direction; an electrolytic solution that osmoses to an inside of the electrode assembly; a battery case that is configured to accommodate the electrode assembly; a terminal that is attached to the battery case; an electrical collector terminal that is configured to connect the electrode assembly and the terminal; and a shrink pack that is configured to coat an outer surface of the electrode assembly, wherein the shrink pack is arranged to cover the openings of the electrode assembly.

Item 6: The secondary battery recited in item 5, wherein the electrical collector terminal comprises a recessed part that is directed inwardly from an outer side surface of the electrical collector terminal, and the shrink pack is arranged to cover the recessed part.

Item 7: The secondary battery recited in item 5 or 6, wherein the electrical collector terminal comprises a protruding part that is directed outwardly from an outer side surface of the electrical collector terminal, and the shrink pack is arranged to cover the protruding part.

Item 8: The secondary battery recited in any one of items 5 to 7, wherein the electrode assembly is a wound electrode assembly in which a positive electrode and a negative electrode are wound via a separator.

## Claims

1. A method for manufacturing a secondary battery (100, 200), comprising:
an assembly producing step (S10) for producing an assembly in which an electrical collector terminal (34, 44) and an electrode assembly (20) are connected;
an electrode assembly accommodating step (S20) for accommodating the electrode assembly (20) to an inside of a shrink pack (80) that is formed in a bag shape and that comprises an upper opening (80h);
an electrolytic solution liquid injection step (S30) for injecting an electrolytic solution into the inside of the shrink pack (80);
an electrolytic solution osmosing step (S40) for osmosing the electrolytic solution to an inside of the electrode assembly (20); and
a shrink pack heat-shrinking step (S50) for making the shrink pack (80) be subjected to a heat shrink.

2. The method for manufacturing the secondary battery (100, 200) according to claim 1, wherein
the electrode assembly (20) is accommodated in a chamber capable of adjusting a pressure, and the electrolytic solution osmosing step (S40) is performed under a reduced pressure condition.

3. The method for manufacturing the secondary battery (100) according to claim 1 or 2, wherein
the electrical collector terminal (34, 44) comprises a recessed part (34r, 44r) that is directed inwardly from an outer side surface of the electrical collector terminal (34, 44), and
at the shrink pack heat-shrinking step (S50), the shrink pack (80) is subjected to the heat shrink so as to make the shrink pack (80) cover the recessed part (34r, 44r).

4. The method for manufacturing the secondary battery (200) according to any one of claims 1 to 3, wherein
the electrical collector terminal (134, 144) comprises a protruding part (134p, 144p) that is directed outwardly from an outer side surface of the electrical collector terminal (134, 144), and
at the shrink pack heat-shrinking step (S50), the shrink pack (80) is subjected to the heat shrink so as to make the shrink pack (80) cover the protruding part (134p, 144p).

5. A secondary battery (100, 200), comprising:
an electrode assembly (20) that comprises openings (20h) at both ends in a width direction;
an electrolytic solution that osmoses to an inside of the electrode assembly (20);
a battery case (10) that is configured to accommodate the electrode assembly (20);
a terminal (30, 40) that is attached to the battery case (10);
an electrical collector terminal (34, 44) that is configured to connect the electrode assembly (20) and the terminal (30, 40); and
a shrink pack (80) that is configured to coat an outer surface of the electrode assembly (20), wherein
the shrink pack (80) is arranged to cover the openings (20h) of the electrode assembly (20).

6. The secondary battery (100) according to claim 5, wherein
the electrical collector terminal (34, 44) comprises a recessed part (34r, 44r) that is directed inwardly from an outer side surface of the electrical collector terminal (34, 44), and
the shrink pack (80) is arranged to cover the recessed part (34r, 44r).

7. The secondary battery (200) according to claim 5 or 6, wherein
the electrical collector terminal (134, 144) comprises a protruding part (134p, 144p) that is directed outwardly from an outer side surface of the electrical collector terminal (134, 144), and
the shrink pack (80) is arranged to cover the protruding part (134p, 144p).

8. The secondary battery (100, 200) according to any one of claims 5 to 7, wherein
the electrode assembly (20) is a wound electrode assembly in which a positive electrode (50) and a negative electrode (60) are wound via a separator (70).
